# EUROPEAN PATENT APPLICATION

(11) **EP 3 457 537 A1**
(43) Date of publication of application: **20.03.2019**
(21) Application number: 18190555.5
(22) Date of filing: 23.08.2018
(51) Int. Cl.: H02K 3/52, H02K 21/22, H02K 1/14

(54) **MOTOR**

(30) Priority: 13.09.2017 JP 2017176206
(71) Applicant: Shinano Kenshi Co., Ltd., Ueda-shi, Nagano 386-0498 (JP)
(72) Inventor: FUKUZAWA, Akihito, Ueda-shi, Nagano 386-0498 (JP)
(74) Representative: Haseltine Lake LLP

(57) **Abstract**

A motor includes: a rotor; a coil; a terminal electrically connected to the coil; a stator including an annular portion, a tooth portion extending radially outward from the annular portion, and a magnetic pole portion formed at an end of the tooth portion and facing the rotor; and an insulator including an annular covering portion covering at least a part of the annular portion, and a tooth covering portion extending radially outward from the annular covering portion and covering at least a part of the tooth portion, the coil being wound around the tooth covering portion, wherein the annular portion is provided with an engaged portion, the annular covering portion is provided with a holding portion holding the terminal, and the holding portion is provided with an engaging portion engaged with the engaged portion.

## Description

### [TECHNICAL FIELD]

The present invention relates to a motor.

### [BACKGROUND ART]

Patent Document 1 discloses a motor that includes terminals connected to coils.

### [PRIOR ART DOCUMENT]

### [PATENT DOCUMENT]

[Patent Document 1] WO 2016/139777

### [SUMMARY OF THE INVENTION]

### [PROBLEMS TO BE SOLVED BY THE INVENTION]

In the technology disclosed in Patent Document 1, as depending on tension of the coil, the terminal might tilt. This might influence assembling workability.

It is desirable to provide a motor that suppresses a terminal from tilting.

### [MEANS FOR SOLVING THE PROBLEMS]

The above desirable effect, among others, is achieved by a motor including: a rotor; a coil; a terminal electrically connected to the coil; a stator including an annular portion, a tooth portion extending radially outward from the annular portion, and a magnetic pole portion formed at an end of the tooth portion and facing the rotor; and an insulator including an annular covering portion covering at least a part of the annular portion, and a tooth covering portion extending radially outward from the annular covering portion and covering at least a part of the tooth portion, the coil being wound around the tooth covering portion, wherein the annular portion is provided with an engaged portion, the annular covering portion is provided with a holding portion holding the terminal, and the holding portion is provided with an engaging portion engaged with the engaged portion.

### [EFFECTS OF THE INVENTION]

According to the present invention, it is possible to provide a motor that suppresses a terminal from tilting.

### [BRIEF DESCRIPTION OF THE DRAWINGS]

Embodiments of the invention are set out, by way of example only, with reference to the following drawings, in which:
FIG. 1 is an external view of a blower device according to the present embodiment;
FIG. 2 is a cross-sectional view taken along line A-A of FIG. 1;
FIG. 3 is a view of a stator into which insulators are assembled;
FIG. 4A is a view only of the stator, and FIG. 4B is a view only of the insulator;
FIGs. 5A and 5B are external views of a housing;
FIGs. 6A and 6B are explanatory views of fixing the stator to the housing; and
FIG. 7 is a view of the stator to which the housing is fixed when viewed in the axial direction.

### [MODES FOR CARRYING OUT THE INVENTION]

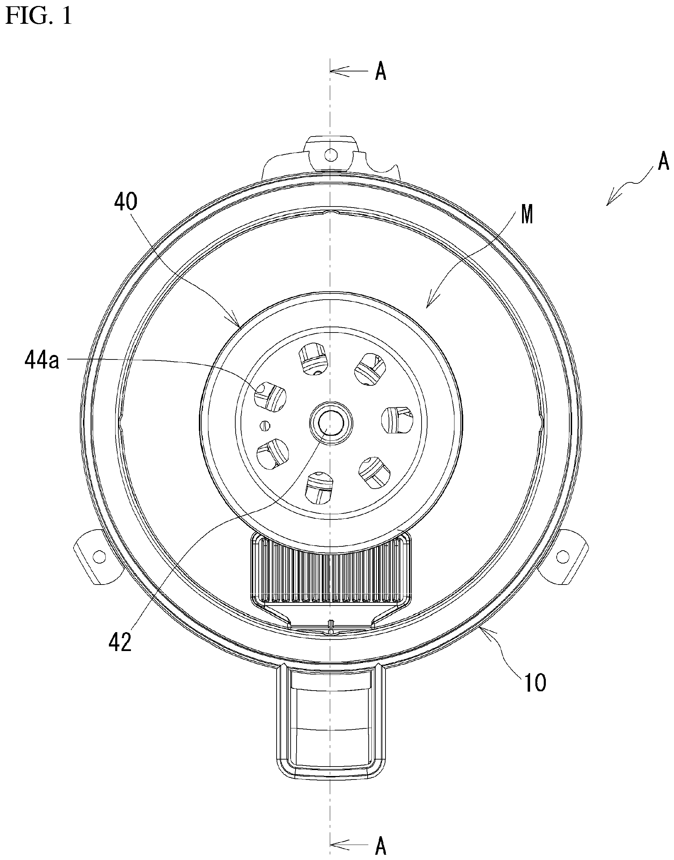

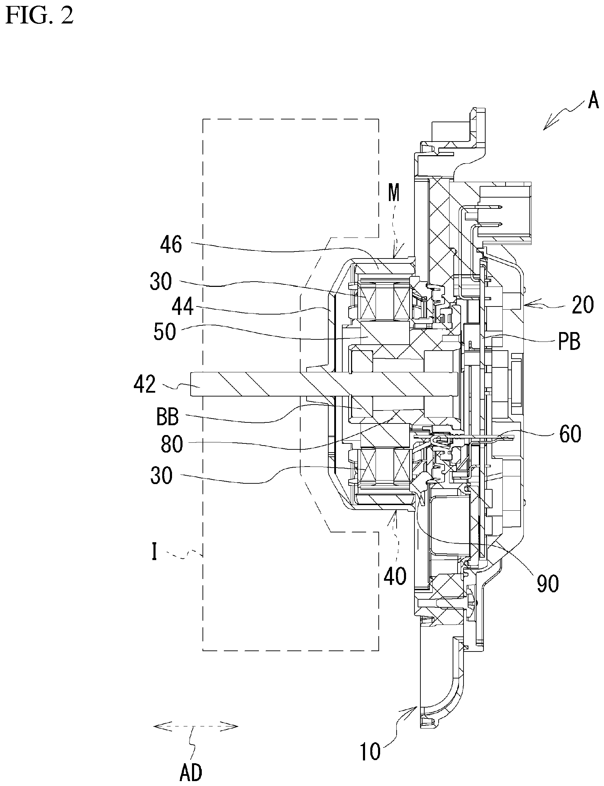

FIG. 1 is an external view of a blower device A according to the present embodiment. FIG. 2 is a cross-sectional view taken along line A-A of FIG. 1. The blower device A includes cases 10 and 20, a motor M, a fan I rotated by the motor M, a printed circuit board PB electrically connected to the motor M, and the like. Additionally, the fan I is illustrated only in FIG. 2 and is omitted in the other drawings. The motor M and the fan I are positioned on one side with respect to the case 10. A case 20 is attached to the other side of the case 10. The cases 10 and 20, each formed into a semi-casing shape, are assembled into each other to house the printed circuit board PB. The cases 10 and 20 are made of, but not limited to, a synthetic resin, and may be made of a metal.

The motor M will be described. As illustrated in FIG. 2, the motor M is positioned between the fan I and the case 10. The motor M includes coils 30, a rotor 40, a stator 50, a housing 80 and the like. The stator 50, made of a metal, will be described later in detail. The coils 30 are wound around respective teeth portions of the stator 50. The coils 30 are electrically connected to the printed circuit board PB via terminals 60 which are not electrically connected to and is supported by the stator 50. Parts for controlling the energization states of the coils 30 are mounted on the printed circuit board PB.

The rotor 40 includes a rotational shaft 42, a yoke 44, and one or more permanent magnets 46. The rotational shaft 42, penetrating through the housing 80, is rotatably supported. Specifically, the rotational shaft 42 is rotatably supported by a bearing B held in the housing 80. The yoke 44, made of a metal having a substantially cylindrical shape, is fixed to the rotational shaft 42 outside the housing 80. One or more permanent magnets 46 are fixed to an inner circumferential surface of the yoke 44. Additionally, the yoke 44 is provided with vent holes 44a around the rotational shaft 42, thereby promoting heat dissipation of the motor M. The permanent magnets 46 face an outer side of the teeth portions of the stator 50. When the coils 30 are energized to excite the teeth portions of the stator 50, the magnetic attractive force and the magnetic repulsive force are exerted between the permanent magnets 46 and the teeth portions, whereby the yoke 44, that is, the rotor 40 rotates relative to the stator 50. In such a manner, the motor M is an outer rotor type motor in which the rotor 40 rotates.

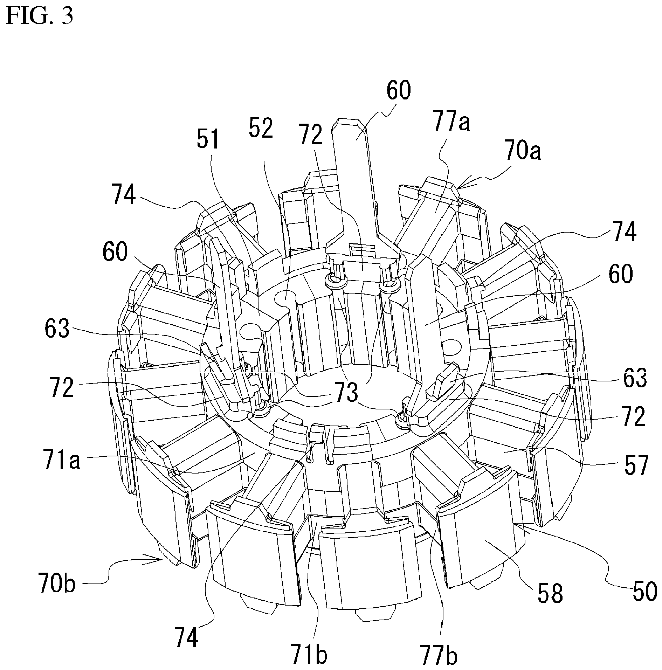

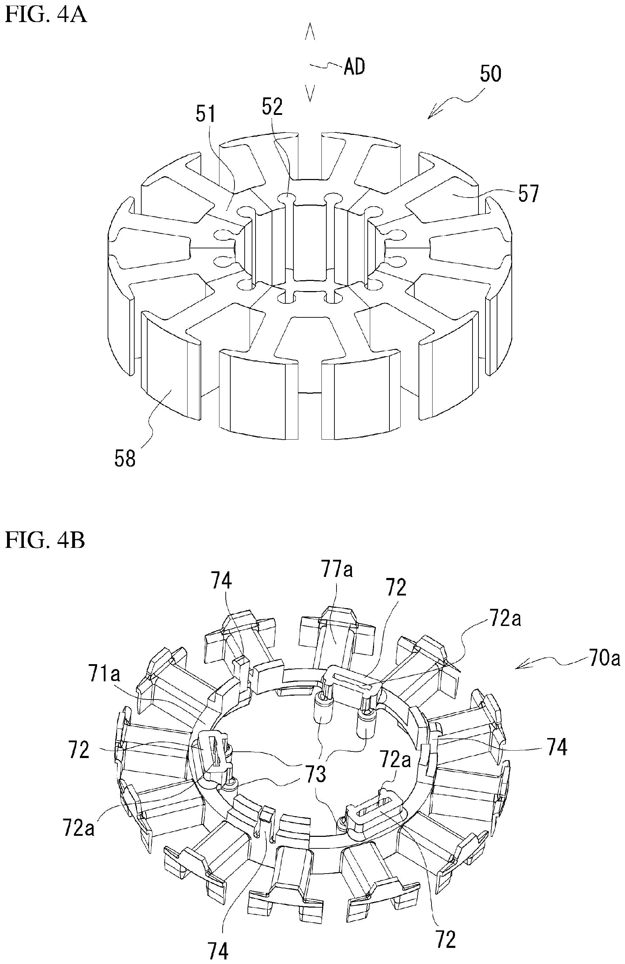

Next, a description will be given of the stator 50 and parts assembled therein. FIG. 3 is a view of the stator 50 into which insulators 70a and 70b are assembled. In addition, the three terminals 60 are assembled into the insulator 70a. FIG. 4A is a view only of the stator 50. FIG. 4B is a view only of the insulator 70a. Firstly, the stator 50 will be described. As illustrated in FIG. 4A, the stator 50 includes an annular portion 51, teeth portions 57, and magnetic pole portions 58. The annular portion 51 is formed into a substantially annular shape having a predetermined thickness in the axial direction AD. The teeth portions 57 extend radially outward from the annular portion 51. The magnetic pole portions 58, formed at respective ends of the teeth portions 57, face the above-described permanent magnets 46. Grooves 52 extending in the axial direction AD are provided at even angular intervals in the inner circumference of the annular portion 51. The number of the grooves 52 corresponds to the number of the teeth portions 57 as will be described later.

Next, the insulators 70a and 70b will be described. Each of the insulators 70a and 70b is made of a synthetic resin having insulating property. The insulator 70a is assembled into the stator 50 near the case 10. The insulator 70b is assembled into the stator 50 near the fan I. As illustrated in FIG. 4B, the insulator 70a includes an annular covering portion 71a and teeth covering portions 77a. The annular covering portion 71a is formed into a substantially annular shape so as to cover an outer circumferential side of an end portion, in the axial direction AD, of the annular portion 51 of the stator 50 and a part of an outer circumferential surface of the annular portion 51. The annular covering portion 71a is positioned radially outward from the grooves 52 so as not to cover the grooves 52 of the stator 50. The teeth covering portions 77a, extending radially outward from the annular covering portion 71a, cover respective sides of the teeth portions 57 of the stator 50. As illustrated in FIG. 3, the insulator 70b also includes an annular covering portion 71b and teeth covering portions 77b. The annular covering portion 71b covers the other side, in the axial direction AD, of the annular portion 51 of the stator 50. The teeth covering portions 77b cover the respective other side of the teeth portions 57 of the stator 50. Additionally, the insulators 70a and 70b expose the magnetic pole portions 58. Although not illustrated in FIG. 3, the coils 30 described above are wound around the respective teeth portions 57 of the stator 50 via the teeth covering portions 77a and 77b.

As illustrated in FIG. 4B, the annular covering portion 71a is provided with three holding portions 72 that are positioned at substantially equal angular intervals in the circumferential direction. The holding portions 72 are provided slightly radially inward from the annular covering portion 71a. Each holding portion 72 is formed with a holding hole 72a having a slit shape and a bottom. As illustrated in FIG. 3, a proximal end of the terminal 60, having a thin plate shape and made of a metal, is inserted into the holding hole 72a, so that the terminal 60 is held by the holding portion 72. As illustrated in FIG. 3, the terminal 60 is formed with a bent portion 63 which is partially cut out and bent radially outward. A part of the coil 30 wound around the tooth portion 57 through the teeth covering portions 77a and 77b is pulled out and hooked to the bent portion 63. Thus, the coil 30 and the terminal 60 are electrically connected to each other. As illustrated in FIG. 2, a distal end of the terminal 60 is electrically connected to the printed circuit board PB via a metal member.

As illustrated in FIGs. 3 and 4B, each holding portion 72 is provided with two engaging pins 73. The engaging pin 73 extends from a surface, close to the annular portion 51, of the holding portion 72 in the axial direction AD. The engaging pin 73, shorter than the groove 52, is engaged with and fitted into the groove 52. Accordingly, the holding portion 72 is stably attached to the annular portion 51 of the stator 50. Thus, the terminal 60 is also stably held by the holding portion 72. For example, as depending on the tension of the coil 30, the bent portion 63 might be pulled radially outward, so that and the terminal 60 might tilt radially outward. In this case, the workability in assembling the stator 50 into the housing 80 described later might be degraded. Since the engaging pin 73 is engaged with the groove 52 in the present embodiment, the holding portion 72 is suppressed from tilting, which also suppresses the terminal 60 from tilting. In particular, the coil 30 which might cause the terminal 60 to tilt is positioned radially outward from the terminal 60, whereas the engaging pin 73 engaged with the groove 52 is positioned radially inward from the holding hole 72a of the holding portion 72 into which the terminal 60 is inserted. It is therefore possible to suppress the terminal 60 from tilting against the tension of the coil 30. The engaging pin 73 and the groove 52 are examples of the engaging portion and the engaged portion, respectively.

In the above embodiment, the groove 52 is formed into a groove shape so as to open the inner surface of the annular portion 51 along the axial direction AD. However, the groove 52 is not limited to this, and may be a hole so as not to open the inner surface of the annular portion 51. In this case, it may be a hole having a bottom or a through hole. The number of the grooves 52 is not limited.

As illustrated in FIG. 4B, the annular covering portion 71a is provided with three snap-fit claws 74 at substantially equal angular intervals. The snap-fit claw 74 is provided between the holding portions 72. The snap-fit claw 74 is engaged with a coil cover 90 described later, which fixes the coil cover 90 to the insulator 70a.

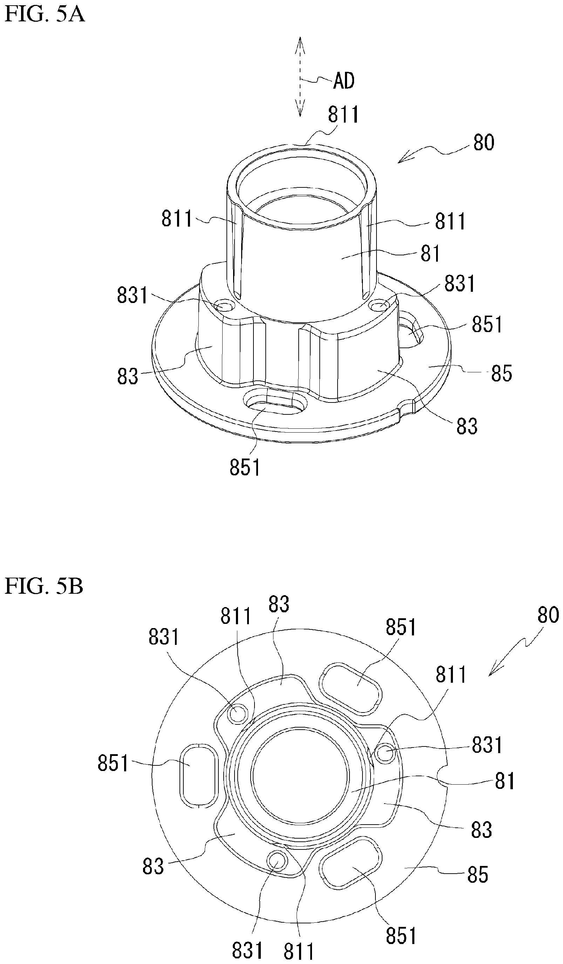

Next, a description will be given of the housing 80 to which the stator 50 is fixed. FIGs. 5A and 5B are external views of the housing 80. The housing 80 includes a cylindrical portion 81, a support portion 83, and a flange portion 85 formed in this order in the axial direction AD. The housing 80 is assembled within the blower device A in a state where the flange portion 85 is positioned near the printed circuit board PB and the cylindrical portion 81 is positioned near the yoke 44. The cylindrical portion 81 has a substantially cylindrical shape. Although not illustrated in FIGs. 5A and 5B, the bearing BB illustrated in FIG. 2 is held by the cylindrical portion 81 and is fitted into an inner circumferential surface thereof, whereby the rotational shaft 42 is rotatably supported in the inner side of the housing 80. The cylindrical portion 81 is provided, on its outer circumferential surface, with three receiving grooves 811 at substantially equal angular intervals. The receiving grooves 811, extending in the axial direction AD, are recessed relative to the other portion of the cylindrical portion 81. The receiving grooves 811 are provided to avoid contacting with screws S described later.

Three support portions 83 are provided to protrude radially outward from the cylindrical portion 81 at substantially equal angular intervals. Each support portion 83 is provided with a screw hole 831. The screw holes 831 positionally correspond to the respective receiving grooves 811. As will be described later in detail, the annular portion 51 of the stator 50 is fixed to the outside of the support portions 83 by the screws S. The flange portion 85 has a thin annular shape. The flange portion 85 is provided with three receiving holes 851. The receiving hole 851 is formed at a position where the support portion 83 does not protrude, that is, at a position sandwiched between the two support portions 83.

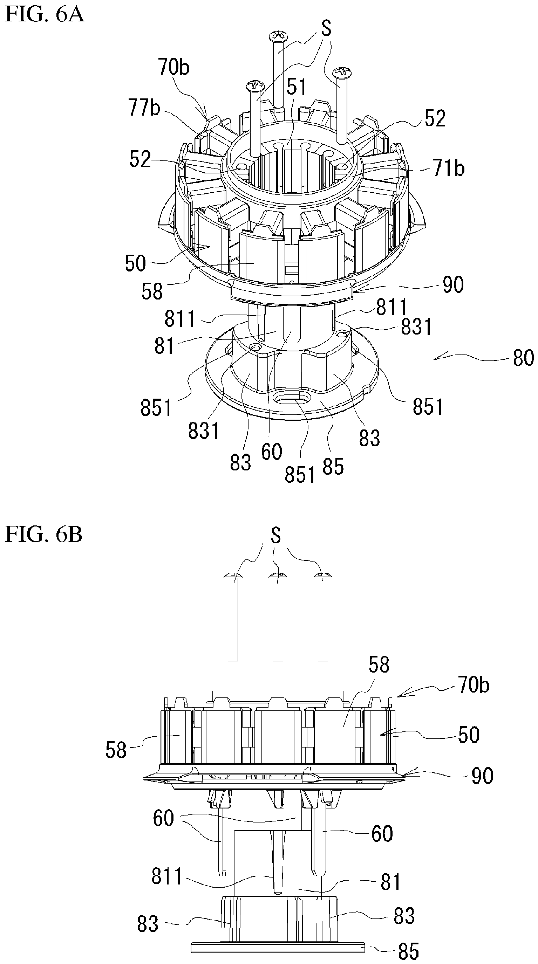

FIGs. 6A and 6B are explanatory views of fixing the stator 50 to the housing 80. Additionally, the illustration of the coil 30 is omitted. The cylindrical portion 81 of the housing 80 is inserted from the insulator 70a into the annular portion 51 of the stator 50, around which the coil 30 is wound via the insulator 70a holding the terminal 60 and the insulator 70b. At this time, the terminal 60 is positioned between the two support portions 83, and then is inserted into the receiving hole 851. The tilting of the terminal 60 is suppressed as described above, which facilitates inserting the terminal 60 into the receiving hole 851, and which suppresses the deterioration in workability. Next, the grooves 52 of the stator 50 are located above the support portions 83 such that the grooves 52 not inserted by the engaging pins 73 overlap the respective screw holes 831 in the axial direction AD. Then, the screws S are inserted into the grooves 52 overlapping the screw holes 831, and are screwed therewith. Consequently, the stator 50 is fixed to the housing 80. Additionally, the groove 52 is not provided on its inner surface with a thread groove, and the radial size of the groove 52 is set to such a degree as to receive a body portion of the screw S. The screw S is an example of a fixing member fixing the annular portion 51 of the stator 50 to the housing 80.

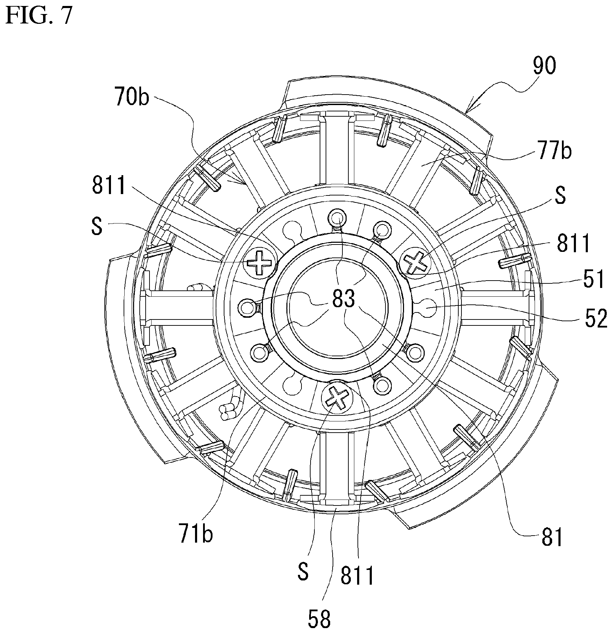

FIG. 7 is a view of the stator 50 to which the housing 80 is fixed when viewed in the axial direction AD. In this way, the grooves 52 having the same shape and the same size function as engaged portions engaged with the respective engaging pins 73, and also function as inserted portions into which the respective screws S are inserted. This suppresses an increase in production cost of the stator 50 in comparison with a case of providing such engaged portions individually from such inserted portions in the stator 50. In addition, in the present embodiment, the grooves 52 serving as the engaged portions and the inserted portions are circumferentially adjacent to one another. For example, in a case where the engaged portions are radially separated from the inserted portions, the stator 50 might be enlarged in the radial direction. However, in the present embodiment, the occurrence of such a problem is suppressed.

While the exemplary embodiments of the present invention have been illustrated in detail, the present invention is not limited to the above-mentioned embodiments, and other embodiments, variations and modifications may be made without departing from the scope of the present invention.

## Claims

1. A motor comprising:
a rotor (40);
a coil (30);
a terminal (60) electrically connected to the coil (30);
a stator (50) including
an annular portion (51),
a tooth portion (57) extending radially outward from the annular portion (51), and
a magnetic pole portion (58) formed at an end of the tooth portion (57) and facing the rotor (40); and
an insulator (70a) including
an annular covering portion (71a) covering at least a part of the annular portion (51), and
a tooth covering portion (77a) extending radially outward from the annular covering portion (71a) and covering at least a part of the tooth portion (57), the coil (30) being wound around the tooth covering portion (77a),
wherein
the annular portion (51) is provided with an engaged portion (52),
the annular covering portion (71a) is provided with a holding portion (72) holding the terminal (60), and
the holding portion (72) is provided with an engaging portion (73) engaged with the engaged portion (52) .

2. The motor of claim 1, wherein
the coil (30) is positioned radially outward from the terminal (60), and
the engaged portion (52) and the engaging portion (73) are positioned radially inward from the terminal (60) .

3. The motor of claim 1 or 2, wherein
the engaged portion (52) is formed into a groove shape or a hole shape extending in an axial direction (AD) of the rotor (40), and
the engaging portion (73) is a pin (73) engaged with the engaged portion (52).

4. The motor of any of claims 1 to 3, further comprising a housing (80) supporting a rotational shaft (42) of the rotor (40) for rotation in an inner side of the housing (80), the annular portion (51) being fixed to an outer side of the housing (80) with a fixing member (S),
wherein
the annular portion (51) includes an inserted portion (52) into which the fixing member (S) is inserted, and
the engaged portion (52) and the inserted portion (52) are adjacent to each other in a circumferential direction of the annular portion (51).

5. The motor of claim 4, wherein the engaged portion (52) and the inserted portion (52) are formed into a same groove shape or a same hole shape extending in the axial direction (AD) of the rotor (40).
